(19) Europäisches Patentamt
European Patent Office
Office européen des brevets

(11) **EP 4 116 686 B1**

(12) **FASCICULE DE BREVET EUROPEEN**

(45) Date de publication et mention
de la délivrance du brevet:
**03.09.2025 Bulletin 2025/36**

(21) Numéro de dépôt: **22182657.1**

(22) Date de dépôt: **01.07.2022**

(51) Classification Internationale des Brevets (IPC):
*G01K 7/01* (2006.01)   *G01K 7/42* (2006.01)
*G01K 15/00* (2006.01)   *E06B 9/68* (2006.01)
*E06B 9/11* (2006.01)   *H02S 20/20* (2014.01)
*H02S 50/00* (2014.01)

(52) Classification Coopérative des Brevets (CPC):
**G01K 7/01; E06B 9/68; G01K 7/42; G01K 15/005;
H02S 20/20; H02S 50/00;** E06B 9/11;
E06B 2009/6818

(54) **PROCÉDÉ ET SYSTÈME DE MESURE DE TEMPÉRATURE AU MOYEN D'UN MODULE PHOTOVOLTAÏQUE**

VERFAHREN UND SYSTEM ZUR TEMPERATURMESSUNG MITHILFE EINES FOTOVOLTAIKMODULS

METHOD AND SYSTEM FOR MEASURING TEMPERATURE BY MEANS OF A PHOTOVOLTAIC MODULE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **09.07.2021 FR 2107446**

(43) Date de publication de la demande:
**11.01.2023 Bulletin 2023/02**

(73) Titulaires:
• **Commissariat à l'Energie Atomique et aux Energies Alternatives**
**75015 Paris (FR)**
• **BHG**
**68100 Mulhouse (FR)**

(72) Inventeur: **CHAINTREUIL, Nicolas**
**38054 Grenoble Cedex 09 (FR)**

(74) Mandataire: **Cabinet Beaumont**
**4, Place Robert Schuman**
**B.P. 1529**
**38025 Grenoble Cedex 1 (FR)**

(56) Documents cités:
**EP-B1- 4 230 980    DE-A1- 102013 219 494**

• **RUPNIK BRYSON ET AL: "Ambient temperature correction of photovoltaic system performance data", 2014 IEEE 40TH PHOTOVOLTAIC SPECIALIST CONFERENCE (PVSC), IEEE, 8 June 2014 (2014-06-08), pages 1973 - 1977, XP032660033, DOI: 10.1109/PVSC.2014.6925312**
• **HERNANDEZ J ET AL: "Predicting the behavior of a grid-connected photovoltaic system from measurements of solar radiation and ambient temperature", APPLIED ENERGY, ELSEVIER SCIENCE PUBLISHERS, GB, vol. 104, 23 December 2012 (2012-12-23), pages 527 - 537, XP028982580, ISSN: 0306-2619, DOI: 10.1016/ J.APENERGY.2012.10.022**

**Description**

<u>Domaine technique</u>

La présente description concerne de façon générale les systèmes intégrant des modules photovoltaïques, et vise plus particulièrement un procédé et un système de mesure de température au moyen d'un module photovoltaïque.

<u>Technique antérieure</u>

De nombreux systèmes comprenant un ou plusieurs modules photovoltaïques configurés pour alimenter une charge, par exemple une batterie électrique, ont été proposés.

Dans de nombreuses situations, il peut être souhaitable de mesurer une température au sein du système, par exemple en vue de commander en conséquence un élément du système.

Pour ce faire, on prévoit de façon classique une sonde de température dédiée à cette mesure.

L'intégration d'une telle sonde au sein du système peut toutefois poser des difficultés.

Le document DE102013219494, l'article intitulé « Ambient temperature correction of photovoltaic system performance data » de Rupnik Bryson et al., et l'article intitulé « Predicting the behavior of a grid-connected photovoltaic system from measurements of solar radiation and ambient temperature » de Hernandez J et al., décrivent des exemples de systèmes comportant des modules photovoltaïques.

Résumé de l'invention

L'invention prévoit un procédé de détermination de la température ambiante extérieure $T_{ext}$ dans un système comportant un module photovoltaïque, comprenant les étapes suivantes :

a) mesurer le courant de court-circuit $I_{sc}$ du module photovoltaïque ;
b) déterminer la température T du module photovoltaïque ; et
c) calculer la température ambiante $T_{ext}$, au moyen d'un dispositif électronique de traitement, en fonction de la valeur du courant de court-circuit $I_{sc}$ mesurée à l'étape a) et de la valeur de la température T du module photovoltaïque déterminée à l'étape b).

Selon l'invention, la valeur $T_{ext}$ est calculée par le dispositif électronique de contrôle suivant la relation suivante :

[Math 10]

$$T_{ext} = A(T) \cdot I_{sc} + B(T),$$

où A et B sont des fonctions polynomiales prédéfinies d'ordres supérieurs ou égaux à 1.

Selon un mode de réalisation, A est une fonction polynomiale d'ordre 3 et B est une fonction polynomiale d'ordre 1.

Selon l'invention, les coefficients des fonctions polynomiales A et B sont déterminés lors d'une phase préalable de calibration et stockés dans une mémoire d'un dispositif électronique de contrôle du module.

Selon un mode de réalisation, à l'étape b), la température T du module photovoltaïque est calculée par le dispositif électronique de contrôle à partir de la valeur du courant $I_{sc}$ mesuré à l'étape a) et d'une mesure de la tension en circuit ouvert $V_{oc}$ du module photovoltaïque.

Selon un mode de réalisation, la valeur T est calculée par le dispositif électronique de contrôle suivant la relation suivante :

[Math 11]

$$T = a(I_{sc}) \cdot V_{oc} + b(I_{sc}),$$

où a et b sont des fonctions polynomiales prédéfinies d'ordres supérieurs ou égaux à 1.

Selon un mode de réalisation, a et b sont des fonctions polynomiales d'ordre 2 définies comme suit :

[Math 12]

$$a = a_{cd} \cdot I_{sc}^2 - b_{cd} \cdot I_{sc} - c_{cd}$$

[Math 13]

$$b = a_{oo} \cdot I_{sc}^2 - b_{oo} \cdot I_{sc} - c_{oo}$$

où $a_{cd}$, $b_{cd}$, $c_{cd}$, $a_{oo}$, $b_{oo}$, et $c_{oo}$ sont des coefficients fixes prédéterminés.

Selon un mode de réalisation, les coefficients desdites fonctions polynomiales sont déterminés lors d'une phase préalable de calibration et stockés dans une mémoire du dispositif électronique de contrôle du module.

Selon un mode de réalisation, le procédé comporte en outre une étape de commande d'un élément commandable électriquement du système en tenant compte de la valeur de la température ambiante $T_{ext}$ calculée à l'étape c).

L'invention prévoit aussi un système comprenant un module photovoltaïque et un dispositif électronique de traitement configuré pour mettre en oeuvre un procédé tel que défini ci-dessus.

Selon un mode de réalisation, le système comprend un dispositif d'occultation motorisé alimenté par le module photovoltaïque.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

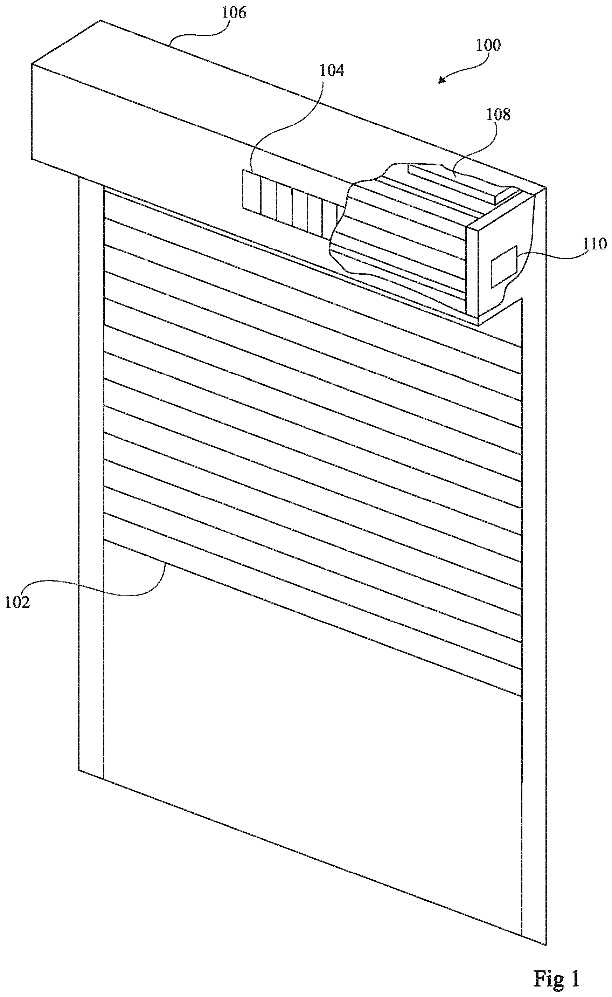

la figure 1 est une vue en perspective illustrant de façon schématique un exemple d'un système intégrant un module photovoltaïque ;

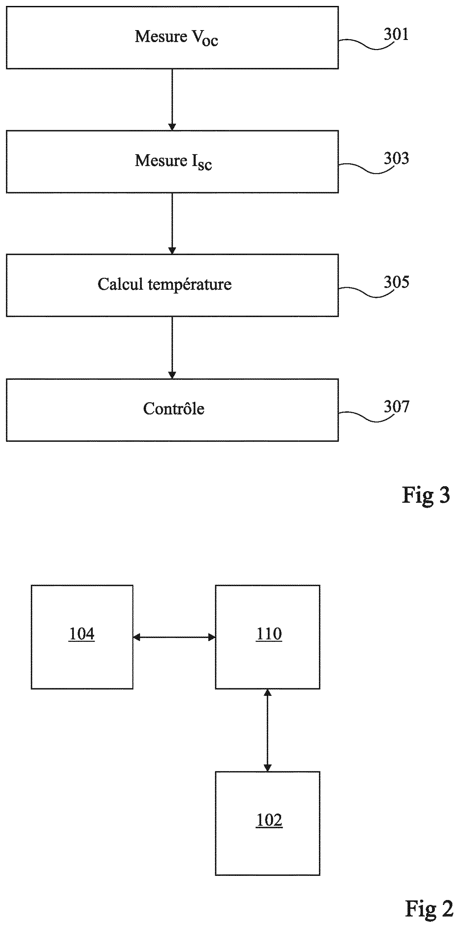

la figure 2 représente de façon schématique, sous forme de blocs, un exemple d'un système de mesure de température selon un mode de réalisation ;

la figure 3 représente de façon schématique, sous forme de blocs, un exemple d'un procédé de mesure de température selon un mode de réalisation ;

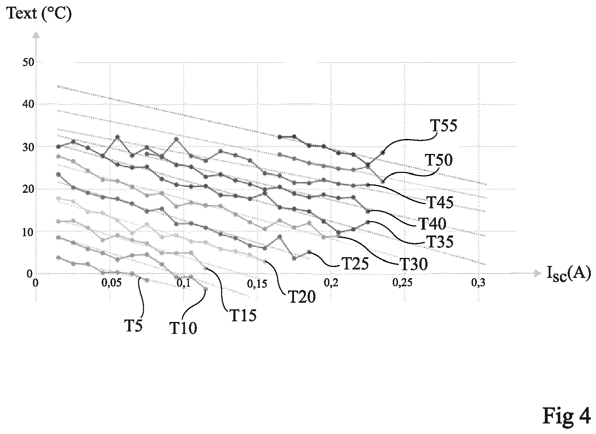

la figure 4 est un diagramme illustrant la relation entre la température ambiante extérieure et le courant de court-circuit d'un module photovoltaïque pour différentes températures du module photovoltaïque ;

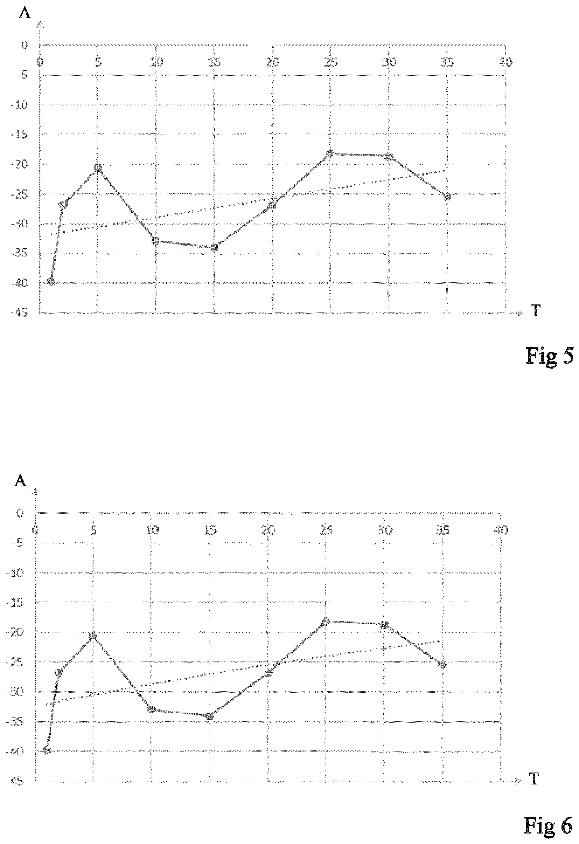

la figure 5 est un diagramme illustrant un exemple d'une relation représentative de l'évolution, en fonction de la température d'un module photovoltaïque, du coefficient directeur d'une droite représentative de l'évolution de la température ambiante en fonction du courant de court-circuit du module ;

la figure 6 est un diagramme illustrant un autre exemple d'une relation représentative de l'évolution, en fonction de la température d'un module photovoltaïque, du coefficient directeur d'une droite représentative de l'évolution de la température ambiante en fonction du courant de court-circuit du module ;

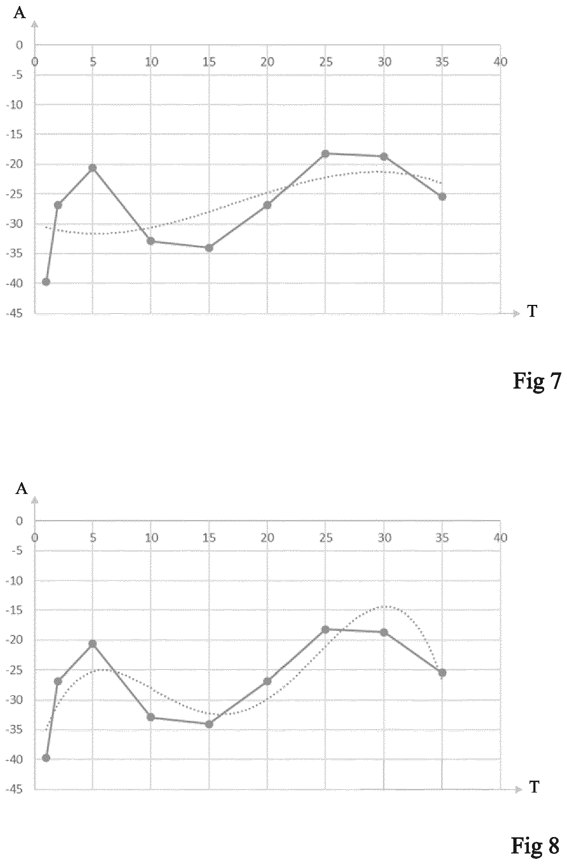

la figure 7 est un diagramme illustrant un autre exemple d'une relation représentative de l'évolution, en fonction de la température d'un module photovoltaïque, du coefficient directeur d'une droite représentative de l'évolution de la température ambiante en fonction du courant de court-circuit du module ;

la figure 8 est un diagramme illustrant un autre exemple d'une relation représentative de l'évolution, en fonction de la température d'un module photovoltaïque, du coefficient directeur d'une droite représentative de l'évolution de la température ambiante en fonction du courant de court-circuit du module ;

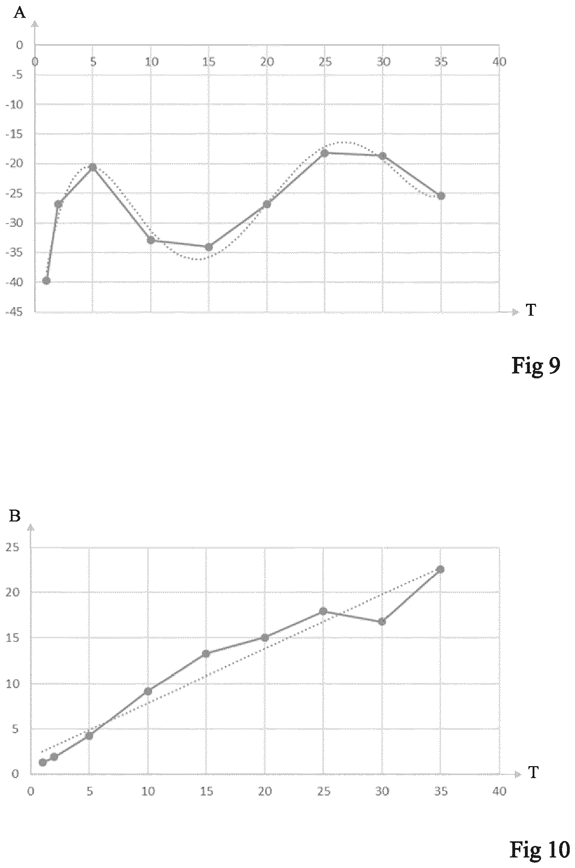

la figure 9 est un diagramme illustrant un autre exemple d'une relation représentative de l'évolution, en fonction de la température d'un module photovoltaïque, du coefficient directeur d'une droite représentative de l'évolution de la température ambiante en fonction du courant de court-circuit du module ;

la figure 10 est un diagramme illustrant un exemple d'une relation représentative de l'évolution, en fonction de la température d'un module photovoltaïque, de l'ordonnée à l'origine d'une droite représentative de l'évolution de la température ambiante en fonction du courant de court-circuit du module ;

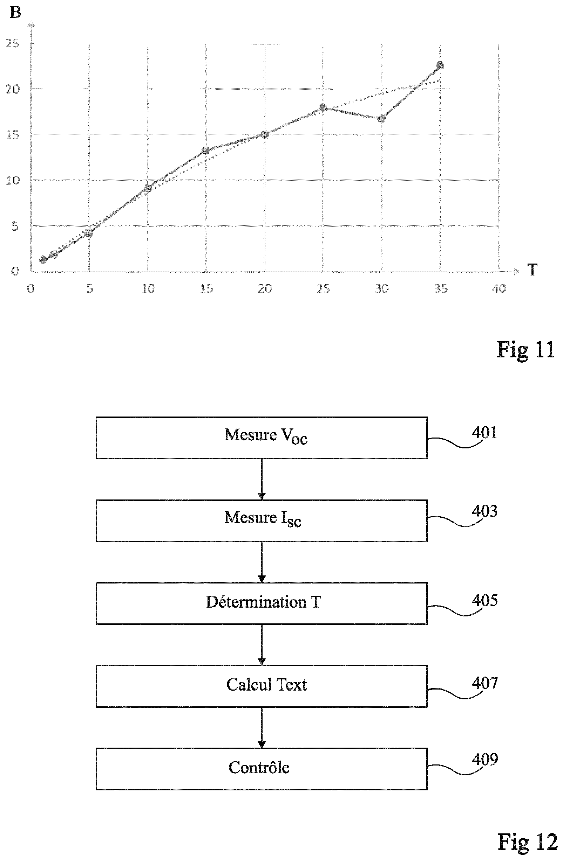

la figure 11 est un diagramme illustrant un autre exemple d'une relation représentative de l'évolution, en fonction de la température d'un module photovoltaïque, de l'ordonnée à l'origine d'une droite représentative de l'évolution de la température ambiante en fonction du courant de court-circuit du module ; et

la figure 12 représente de façon schématique, sous forme de blocs, un autre exemple d'un procédé de mesure de température selon un mode de réalisation.

## Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les circuits de contrôle et de traitement adaptés à mettre en oeuvre les procédés décrits n'ont pas été détaillés, la réalisation de tels circuits étant à la portée de la personne du métier à partir des indications de la présente description. En outre, la réalisation des modules photovoltaïques des systèmes décrits n'a pas été détaillée, les modes de réalisation étant compatible avec tous ou la plupart des modules photovoltaïques connus.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures ou à un dispositif dans une position normale d'utilisation.

Sauf précision contraire, les expressions "environ", "approximativement", "sensiblement", et "de l'ordre de" signifient à 10 % près, de préférence à 5 % près.

La figure 1 est une vue en perspective illustrant de façon schématique un exemple d'un système 100 intégrant un module photovoltaïque.

Dans cet exemple, le système 100 est un dispositif d'occultation motorisé de type volet roulant.

Le dispositif 100 comporte un tablier 102 constitué par un assemblage de plusieurs lames, et comporte en outre un arbre motorisé (non visible sur la figure 1) sur lequel peut être enroulé le tablier 102 et à partir duquel peut être déroulé le tablier 102.

Le dispositif 100 comporte en outre un générateur photovoltaïque ou module photovoltaïque 104, comportant un ou plusieurs panneaux photovoltaïques. A titre d'exemple, le dispositif 100 comporte un caisson 106 dans lequel est disposé l'arbre motorisé. Le ou les panneaux photovoltaïques du module photovoltaïque 104 sont par exemple disposés sur le caisson 106.

Le dispositif 100 comporte de plus une batterie électrique 108 alimentée en énergie électrique par le module photovoltaïque 104 et alimentant en énergie électrique le dispositif 100, et en particulier le moteur d'entrainement (non visible sur la figure 1) de l'arbre d'enroulement du tablier 102. A titre d'exemple, la batterie 108 est disposée dans le caisson 106.

Le dispositif 100 comporte en outre un dispositif électronique de contrôle 110, permettant notamment de commander le moteur du dispositif. A titre d'exemple, le dispositif de contrôle 110 est disposé à l'intérieur du caisson 106.

Le dispositif électronique de contrôle 110 peut comprendre divers capteurs, ainsi qu'un circuit électronique de traitement des données mesurées par les capteurs. A titre d'exemple, le circuit électronique de traitement comprend une unité de traitement de type microcontrôleur, et peut en outre comprendre un ou plusieurs circuits mémoire.

Le dispositif d'occultation 100 est destiné à être monté devant une ouverture (non visible sur la figure 1) d'un bâtiment, apte à laisser passer la lumière, par exemple devant une fenêtre équipée d'une vitre transparente.

Dans cet exemple, le dispositif électronique de contrôle 110 est configuré pour mettre en oeuvre un procédé de commande automatique dit intelligent du dispositif d'occultation, tenant compte notamment de l'irradiation solaire et de la température extérieure. Un tel procédé permet de gérer les apports solaires dans le bâtiment, par exemple en privilégiant l'ouverture des volets exposés au soleil lorsque les températures extérieures sont basses, et/ou en fermant les volets les volets exposés au soleil lorsque les températures extérieures sont élevées.

L'irradiation solaire peut être estimée par le dispositif électronique de contrôle 110 en mesurant le courant de court-circuit du module photovoltaïque 104.

La température extérieure peut quant à elle être mesurée au moyen d'une sonde de température. La prévision d'une telle sonde induit toutefois un coût supplémentaire. De plus, l'intégration d'une telle sonde dans le dispositif 100 peut présenter des difficultés.

Selon l'invention, on prévoit d'utiliser le module photovoltaïque 104 pour estimer la température.

Pour cela, le dispositif de contrôle 110 est configuré pour, lors d'une phase de mesure de température, mesurer la tension en circuit ouvert $V_{oc}$ du module photovoltaïque 104, mesurer le courant de court-circuit $I_{sc}$ du module photovoltaïque 104, puis calculer une valeur T représentative de la température du module photovoltaïque 104, en fonction de la valeur de la tension en circuit ouvert $V_{oc}$ et de la valeur du courant de court-circuit $I_{sc}$.

Les inventeurs ont déterminé que quelle que soit la valeur de l'irradiation solaire, pour autant que cette dernière soit non négligeable, par exemple supérieure ou égale à 10 W/m², de préférence supérieure ou égale à 50 W/m², et plus préférentiellement encore supérieure ou égale à 100 W/m², il existe, pour chaque valeur d'irradiation solaire, une relation sensiblement linéaire entre la température T du module photovoltaïque 104 et sa tension de circuit ouvert $V_{oc}$, de la forme :

[Math 1]

$$T = a \cdot V_{oc} + b$$

où a et b sont des coefficients variant en fonction de l'irradiation solaire $I_{rr}$.

L'irradiation solaire $I_{rr}$ peut elle-même être déterminée en mesurant le courant de court-circuit $I_{sc}$ du module photovoltaïque. En effet, pour un module photovoltaïque donné, le courant de court-circuit $I_{sc}$ du module varie linéairement en fonction de l'irradiation solaire $I_{rr}$.

Les inventeurs ont déterminé que le coefficient directeur a de l'équation Math 1 ci-dessus peut être approximé à partir du courant de court-circuit $I_{sc}$ du module, par la relation polynomiale d'ordre 2 suivante :

[Math 2]

$$a = a_{cd} \cdot I_{sc}^{2} - b_{cd} \cdot I_{sc} - c_{cd}$$

où $a_{cd}$, $b_{cd}$ et $c_{cd}$ sont des coefficients fixes dépendants uniquement des caractéristiques du module photovoltaïque 104.

De façon similaire, l'ordonnée à l'origine b de l'équation Math 1 ci-dessus peut être approximée à partir du courant de court-circuit $I_{sc}$ du module, par la relation polynomiale d'ordre 2 suivante :

[Math 3]

$$b = a_{oo} \cdot I_{sc}^{2} - b_{oo} \cdot I_{sc} - c_{oo}$$

où $a_{oo}$, $b_{oo}$ et $c_{oo}$ sont des coefficients fixes dépendants uniquement des caractéristiques du module photovoltaïque 104.

Ainsi, la température estimée T du module photovoltaïque 104 peut être calculée par le dispositif de contrôle 110, selon la relation suivante :

[Math 4]

$$T = \left( a_{cd} \cdot I_{sc}^{2} - b_{cd} \cdot I_{sc} - c_{cd} \right) \cdot V_{oc} + \left( a_{oo} \cdot I_{sc}^{2} - b_{oo} \cdot I_{sc} - c_{oo} \right)$$

La tension $V_{oc}$ et le courant $I_{sc}$ peuvent être mesurés respectivement par un capteur de tension et par un capteur de courant du dispositif électronique de contrôle 110. Le dispositif de contrôle 110 peut par ailleurs comprendre des interrupteurs commandables pour mettre le module photovoltaïque en circuit ouvert lors de la mesure de la tension $V_{oc}$ et en court-circuit lors de la mesure du courant $I_{sc}$.

Les coefficients $a_{cd}$, $b_{cd}$, $c_{cd}$, $a_{oo}$, $b_{oo}$ et $c_{oo}$ peuvent être déterminés lors d'une phase de calibration, à la conception du module photovoltaïque 104, puis stockés dans une mémoire du dispositif de contrôle 110. Pour déterminer les coefficients $a_{cd}$, $b_{cd}$, $c_{cd}$, $a_{oo}$, $b_{oo}$ et $c_{oo}$, le module 104 peut être placé sur un banc de calibration permettant de faire varier l'irradiation et la température. On vient alors balayer la plage des valeurs d'irradiation auxquelles le module est susceptible d'être soumis en conditions réelles d'utilisation. Pour chaque valeur d'irradiation, on fait varier la température de façon à balayer la plage des températures que peut prendre le module en conditions réelles d'utilisation. Pour chaque valeur d'irradiation et pour chaque valeur de température, on mesure la tension de circuit ouvert $V_{oc}$ du module et on détermine le courant de court-circuit $I_{sc}$ du module. Les coefficients $a_{cd}$, $b_{cd}$, $c_{cd}$, $a_{oo}$, $b_{oo}$ et $c_{oo}$ sont ensuite déterminés par régression polynomiale d'ordre 2 à partir des mesures réalisées.

Le procédé décrit ci-dessus permet d'estimer, à partir d'une simple mesure de la tension de circuit ouvert $V_{oc}$ et du courant de court-circuit $I_{sc}$ du module photovoltaïque 104, la température T du module, et ce par un calcul simple nécessitant des ressources calculatoires limitées et pouvant aisément être mise en oeuvre par un circuit électronique de contrôle embarqué d'un système intégrant le module photovoltaïque.

En pratique, la température T du module photovoltaïque varie en fonction de la température ambiante extérieure $T_{ext}$. La relation entre la température T et la température $T_{ext}$ peut être approximée par une relation linéaire. Le dispositif électronique de contrôle 110 est par exemple configuré pour calculer une estimation de la température ambiante extérieure $T_{ext}$ à partir de la température estimée T du module photovoltaïque, par la relation suivante :

[Math 5]

$$T_{ext} = a_r \cdot \mathrm{T} + b_r$$

où $a_r$ et $b_r$ sont des coefficients constants dépendant de l'installation considérée, représentant offset ou décalage de température et un déphasage thermique entre le module photovoltaïque et l'environnement extérieur.

La température $T_{ext}$ peut par exemple être calculée par le dispositif de contrôle 110 pour l'application susmentionnée de pilotage intelligent du volet roulant.

Les coefficients $a_r$ et $b_r$ peuvent être déterminés lors d'une phase préalable de calibration à la conception ou à l'installation du système, par régression linéaire à partir de données mesurées empiriquement, et stockés dans une mémoire du dispositif électronique de contrôle 110.

La méthode décrite ci-dessus permet d'obtenir une estimation précise de la température T du module photovoltaïque et de la température ambiante extérieure $T_{ext}$ du module, directement à partir de mesures de signaux électriques de courant et de tension aux bornes du module. On peut ainsi se passer d'une sonde de température dédiée à ces mesures.

Les modes de réalisations décrits ne se limitent pas à l'application susmentionnée à un système de type volet roulant motorisé. Plus généralement, la solution proposée peut s'appliquer à tout système comprenant un module photovoltaïque, et dans lequel on souhaite pouvoir mesurer la température du module et de son environnement extérieur. Par exemple, le module photovoltaïque peut être installé sur un toit d'un bâtiment. La température T du module peut par exemple être exploitée par un dispositif électronique de contrôle pour actionner des mécanismes de protection, par exemple pour éviter des surchauffes. La température $T_{ext}$ de l'environnement extérieur peut quant à elle être exploitée par un dispositif électronique de contrôle pour piloter de façon automatique un système de chauffage ou de refroidissement du bâtiment, ou, simplement transmise à l'utilisateur via un dispositif d'affichage électronique, pour information.

La figure 2 représente de façon schématique, sous forme de blocs, un exemple d'un système 100 de mesure de température selon un mode de réalisation. Le système 100 de la figure 2 peut être un système du type décrit en relation avec la figure 1, ou, plus généralement, tout système intégrant un module photovoltaïque 104. Le système 100 comprend un dispositif électronique de contrôle 110 relié au module photovoltaïque 104 et adapté à mesurer la tension de circuit ouvert $V_{oc}$ et le courant de court-circuit $I_{sc}$ du module. Le dispositif électronique de contrôle 110 est en outre relié à un élément commandable électriquement 102 du système. Le dispositif électronique 110 est configuré pour estimer la température T du module photovoltaïque 104 et la température extérieure $T_{ext}$ à partir de la tension $V_{oc}$ et du courant $I_{sc}$, et commander en conséquence l'élément 102.

La figure 3 représente de façon schématique, sous forme de blocs, un exemple d'un procédé de mesure de température selon un mode de réalisation, mis en oeuvre par le dispositif électronique de contrôle 110 dans un système du type décrit en relation avec la figure 2.

Le procédé comprend une étape 301 de mesure de la tension de circuit ouvert $V_{oc}$ du module 104, suivie d'une étape 303 de mesure du courant de court-circuit $I_{sc}$ du module. En pratique, l'ordre des étapes 301 et 303 peut être inversé.

Le procédé comprend en outre, après les étapes 301 et 303, une étape 305 de calcul de la température T du module et de la température ambiante $T_{ext}$ de l'environnement à partir de la tension $V_{oc}$ et du courant $I_{sc}$, tel que décrit ci-dessus en relation avec la figure 1.

Le procédé comprend en outre, après l'étape 305, une étape 307 de contrôle d'un élément 102 du système en tenant compte de la température calculée à l'étape 305.

Dans les exemples décrits ci-dessus, la température ambiante $T_{ext}$ de l'environnement est déduite de la température estimée T du module photovoltaïque par une relation linéaire à coefficients constants (équation Math 5 ci-dessus).

Dans certaines conditions, la précision de cette estimation peut s'avérer insuffisante, notamment lorsque le module photovoltaïque est soumis à une forte irradiation.

Selon un aspect d'un mode de réalisation, on prévoit de tenir compte non seulement de la température estimée T du module photovoltaïque, mais aussi du courant de court-circuit mesuré $I_{sc}$ du module, pour estimer la température ambiante $T_{ext}$.

Par température ambiante, on entend ici la température de l'air ambiant extérieur, c'est-à-dire de l'air à l'extérieur du module, au voisinage du module, par exemple à une distance de 1 à 30 cm du module, par exemple à une distance de 1 à 10 cm du module.

Les inventeurs ont constaté que, pour une température donnée T quelconque du module photovoltaïque, la relation entre la température ambiante $T_{ext}$ et le courant de court-circuit $I_{sc}$ du module est sensiblement linéaire.

La figure 4 est un diagramme illustrant la relation entre la température ambiante extérieure $T_{ext}$ et le courant de court-circuit $I_{sc}$ d'un module photovoltaïque pour différentes températures T du module photovoltaïque.

Plus particulièrement, la figure 4 comprend 11 courbes T5, T10, T15, T20, T25, T30, T35, T40, T45, T50 et T55 représentant chacune l'évolution de la température ambiante $T_{ext}$ (en ordonnée, en °C) en fonction du courant de court-circuit $I_{sc}$ (en abscisse, en ampères), pour respectivement 11 températures T du module photovoltaïque, à savoir respectivement pour T=5°C, T=10°C, T=15°C, T=20°C, T=25°C, T=30°C, T=35°C, T=40°C, T=45°C, T=50°C, et T=55°C.

Comme cela apparaît sur la figure 4, les courbes T5, T10, T15, T20, T25, T30, T35, T40, T45, T50 et T55 sont sensiblement linéaires et décroissantes. Autrement dit, pour une température T donnée du module photovoltaïque, la température ambiante $T_{ext}$ décroît de façon sensiblement linéaire en fonction du courant de court-circuit $I_{sc}$. Sur la figure 4, pour chacune des courbes T5, T10, T15, T20, T25, T30, T35, T40, T45, T50 et T55, une approximation linéaire de la courbe a été représentée en pointillés.

Le dispositif électronique de contrôle 110 est par exemple configuré pour calculer une estimation de la température ambiante extérieure $T_{ext}$ à partir de la température T et du courant de court-circuit $I_{sc}$ du module photovoltaïque, par la relation suivante :

[Math 6]

$$T_{ext} = A \cdot I_{sc} + B$$

où A et B sont des coefficients variant en fonction de la température T du module photovoltaïque.

Les inventeurs ont déterminé que le coefficient directeur A de l'équation Math 6 ci-dessus peut être approximé à partir du courant de la température T du module photovoltaïque, par la relation polynomiale d'ordre 2 suivante :

[Math 7]

$$A = A_{cd} \cdot T^2 - B_{cd} \cdot T - C_{cd}$$

où $A_{cd}$, $B_{cd}$ et $B_{cd}$ sont des coefficients fixes dépendants uniquement des caractéristiques du module photovoltaïque 104 et de son intégration dans le système considéré (notamment de son couplage thermique avec d'autres éléments du système).

De façon similaire, l'ordonnée à l'origine B de l'équation Math 6 ci-dessus peut être approximée à partir du courant de court-circuit $I_{sc}$ du module, par la relation polynomiale d'ordre 2 suivante :

[Math 8]

$$B = A_{oo} \cdot T^2 - B_{oo} \cdot T - C_{oo}$$

où $A_{oo}$, $B_{oo}$ et $B_{oo}$ sont des coefficients fixes dépendants uniquement des caractéristiques du module photovoltaïque 104 et de son intégration dans le système considéré.

Ainsi, la température ambiante $T_{ext}$ peut être calculée par le dispositif de contrôle 110, selon la relation suivante :

[Math 9]

$$T_{ext} = (A_{cd} \cdot T^2 - B_{cd} \cdot T - C_{cd}) \cdot I_{sc} + (A_{oo} \cdot T^2 - B_{oo} \cdot T - C_{oo})$$

La température T peut être estimée par la méthode décrite ci-dessus, à partir d'une mesure du courant de court-circuit $I_{sc}$ et d'une mesure de la tension de circuit ouvert $V_{oc}$ du module photovoltaïque (équation Math 1). Dans ce cas, on utilise de préférence la même valeur mesurée du courant $I_{sc}$ pour l'estimation de la température T du module (équation Math 1) et pour le calcul de la température ambiante (équation Math 6), de façon à éviter d'éventuelles imprécisions liées à une variation de l'irradiation.

A titre de variante, la température T peut être mesurée par une sonde de température du système. En effet, l'intégration d'une sonde adaptée à mesurer la température du module photovoltaïque est généralement plus simple que l'intégration d'une sonde de température ambiante extérieure.

Les coefficients $A_{cd}$, $B_{cd}$, $C_{cd}$, $A_{oo}$, $B_{oo}$ et $C_{oo}$ peuvent être déterminés lors d'une phase de calibration, à la conception du système, puis stockés dans une mémoire du dispositif de contrôle 110. Pour déterminer les coefficients $A_{cd}$, $B_{cd}$, $C_{cd}$, $A_{oo}$, $B_{oo}$ et $C_{oo}$, le système peut être installé dans une chambre de calibration permettant de faire varier la température ambiante $T_{ext}$ et l'irradiation. On vient alors balayer la plage des valeurs de température ambiante $T_{ext}$ auxquelles le module est susceptible d'être soumis en conditions réelles d'utilisation. Pour chaque valeur de température ambiante $T_{ext}$, on fait varier l'irradiation de façon à balayer la plage d'irradiations auxquelles le module est susceptible d'être soumis en conditions réelles d'utilisation. Pour chaque valeur d'irradiation et pour chaque valeur de température ambiante $T_{ext}$, on mesure la température T du module photovoltaïque et on détermine le courant de court-circuit $I_{sc}$ du module. Les coefficients $A_{cd}$, $B_{cd}$, $C_{cd}$, $A_{oo}$, $B_{oo}$ et $C_{oo}$ sont ensuite déterminés par régression polynomiale d'ordre 2 à partir des mesures réalisées.

Le procédé décrit ci-dessus permet d'estimer la température ambiante $T_{ext}$ de façon précise, à partir de la température T, estimée ou mesurée, du module photovoltaïque, et d'une mesure du courant de court-circuit $I_{sc}$ du module, et ce par un calcul simple nécessitant des ressources calculatoires limitées et pouvant aisément être mise en oeuvre par un circuit électronique de contrôle embarqué du système intégrant le module photovoltaïque.

A titre de variante, les équations Math 7 et Math 8 ci-dessus, définissant respectivement les coefficients A et B en fonction de la température T, peuvent être adaptées en fonction de l'application et de la précision requise. Ainsi, par exemple, pour accroître la précision de l'estimation de la température T du module, les coefficients A et B de l'équation Math 6 pourront être exprimés et calculés par une relation polynomiale d'ordre supérieur à 2. A l'inverse, si une précision élevée n'est pas nécessaire et pour simplifier les calculs à mettre en oeuvre par le dispositif électronique de contrôle 110, les coefficients A et B peuvent être exprimés par une relation polynomiale d'ordre 1 (relation linéaire).

Les inventeurs ont constaté que l'évolution réelle du coefficient A en fonction de la température T a, en première approche, dans une plage de température T allant de 0 à 40°C, la forme d'une sinusoïde amortie, telle que représentée, à titre d'exemple, en trait plein, sur les figures 5, 6, 7, 8 et 9.

Les inventeurs ont en outre constaté que l'évolution réelle du coefficient B en fonction de la température T a, en première approche, dans la plage de température T allant de 0 à 40°C, une forme sensiblement linéaire, telle que représentée, à titre d'exemple, en trait plein, sur les figures 10 et 11.

Les figures 5, 6, 7, 8 et 9 illustrent chacune, par une courbe en pointillés, une approximation polynomiale de l'évolution réelle du coefficient A en fonction de la température T. Plus particulièrement, les figures 5, 6, 7, 8 et 9 représentent respectivement une approximation polynomiale d'ordre 1, une approximation polynomiale d'ordre 2, une approximation polynomiale d'ordre 3, une approximation polynomiale d'ordre 4 et une approximation polynomiale d'ordre 5 de l'évolution du coefficient A en fonction de la température T.

De façon similaire, les figures 10 et 11 illustrent chacune, par une courbe en pointillés, une approximation polynomiale de l'évolution réelle du coefficient B en fonction de la température T. Plus particulièrement, les figures 10 et 11 représentent respectivement une approximation polynomiale d'ordre 1 et une approximation polynomiale d'ordre 2 de l'évolution du coefficient B en fonction de la température T.

Pour ce qui est du coefficient A, on observe que le gain de précision entre l'approximation polynomiale d'ordre 1 (figure 5) et l'approximation polynomiale d'ordre 2 est négligeable. Une approximation polynomiale d'ordre 3 permet en revanche d'améliorer significativement la précision pour des températures au-delà de 15°C. Une approximation polynomiale d'ordre 4 permet d'obtenir une bonne précision sur toute la plage de température considérée. Une approximation polynomiale d'ordre 5 permet d'obtenir une précision très élevée sur toute la plage de température, au prix d'une puissance de calcul requise plus élevée.

Pour ce qui est du coefficient B, on observe que la précision est particulièrement bonne sur toute la plage de température avec une approximation polynomiale d'ordre 1, et que le gain procuré par une approximation polynomiale d'ordre 2 est modéré.

A titre d'exemple, les coefficients A et B peuvent être approximés respectivement par une relation polynomiale d'ordre 3 et par une relation polynomiale d'ordre 1, ce qui permet d'obtenir un compromis satisfaisant entre la précision et la puissance de calcul requise.

La figure 12 représente de façon schématique, sous forme de blocs, un exemple d'un procédé de mesure de la température ambiante $T_{ext}$ selon un mode de réalisation, mis en oeuvre par le dispositif électronique de contrôle 110 dans un système du type décrit en relation avec la figure 2.

Le procédé comprend une étape 401 de mesure de la tension de circuit ouvert $V_{oc}$ du module 104, suivie d'une étape 403 de mesure du courant de court-circuit $I_{sc}$ du module. En pratique, l'ordre des étapes 401 et 403 peut être inversé.

Le procédé comprend en outre, après les étapes 401 et 403, une étape 405 de calcul de la température T du module à partir de la tension $V_{oc}$ mesurée à l'étape 401 et du courant $I_{sc}$ mesuré à l'étape 403, tel que décrit ci-dessus en relation avec la figure 1.

Le procédé comprend en outre, après l'étape 405, une étape 407 de calcul de la température ambiante $T_{ext}$, à partir de la température T déterminée à l'étape 405 et du courant $I_{sc}$ mesuré à l'étape 403, tel que décrit ci-dessus (équation Math 6).

Le procédé comprend en outre, après l'étape 407, une étape 409 de contrôle d'un élément 102 du système en tenant compte de la température ambiante $T_{ext}$ calculée à l'étape 407.

A titre de variante, à l'étape 405, la température T du module peut être déterminée par tout autre moyen que par la méthode décrite ci-dessus en relation avec la figure 1. A titre d'exemple, la température T peut être mesurée au moyen d'une sonde de température intégrée au système. Dans ce cas, l'étape 401 peut être omise. De plus, l'ordre des étapes 403 et 405 peut alors être inversé.

Divers modes de réalisation et variantes ont été décrits. En particulier, les modes de réalisation décrits ne se limitent pas aux exemples d'applications mentionnés explicitement ci-dessus, mais peuvent être adaptés à tout système intégrant un module photovoltaïque et dans lequel on peut tirer profit d'une mesure de température du module photovoltaïque et de son environnement.

Les modes de réalisation décrits se limitent à l'exemple particulier décrit ci-dessus dans lequel le calcul de température ambiante est mis en oeuvre par le dispositif électronique de contrôle du module. Dans des exemples ne faisant pas partie de l'invention, le calcul peut être mis en oeuvre par un dispositif électronique de traitement externe distant, par exemple un ordinateur, par exemple lors d'une phase de post-traitement de données passées acquises par le dispositif électronique de contrôle du module.

En outre, la personne du métier comprendra que certaines des équations mathématiques susmentionnées peuvent être adaptées en fonction de l'application et de la précision requise. Ainsi, par exemple, pour accroître la précision de l'estimation de la température T du module, les coefficients a et b de l'équation Math 1 susmentionnés pourront être exprimés et calculés par une relation polynomiale d'ordre supérieur à 2. A l'inverse, si une précision élevée n'est pas nécessaire et pour simplifier les calculs à mettre en oeuvre par le dispositif électronique de contrôle 110, les coefficients a et b peuvent être exprimés par une relation polynomiale d'ordre 1 (relation linéaire). De façon similaire, pour accroître la précision de l'estimation de la température ambiante extérieure $T_{ext}$, l'approximation linéaire exprimée par l'équation Math 5 susmentionnée peut être remplacée par une approximation polynomiale d'ordre supérieur ou égal à 2.

## Revendications

1. Procédé de détermination de la température ambiante extérieure $T_{ext}$ dans un système comportant un module photovoltaïque (104), comprenant les étapes suivantes :

   a) mesurer le courant de court-circuit $I_{sc}$ du module photovoltaïque ;
   b) déterminer la température T du module photovoltaïque ; et
   c) calculer la température ambiante $T_{ext}$, au moyen d'un dispositif électronique de traitement d'un dispositif électronique de contrôle (110), en fonction de la valeur du courant de court-circuit $I_{sc}$ mesurée à l'étape a) et de la valeur de la température T du module photovoltaïque déterminée à l'étape b),
   dans lequel la valeur $T_{ext}$ est calculée par le dispositif électronique de contrôle (110) suivant la relation suivante :

$$T_{ext} = A(T) \cdot I_{sc} + B(T),$$

   où A et B sont des fonctions polynomiales prédéfinies d'ordres supérieurs ou égaux à 1,
   et dans lequel les coefficients desdites fonctions polynomiales A et B sont déterminés lors d'une phase préalable de calibration et stockés dans une mémoire du dispositif électronique de contrôle (110) du module.

2. Procédé selon la revendication 1, dans lequel A est une fonction polynomiale d'ordre 3 et B est une fonction polynomiale d'ordre 1.

3. Procédé selon la revendication 1 ou 2, dans lequel, à l'étape b), la température T du module photovoltaïque est calculée par le dispositif électronique de contrôle (110) à partir de la valeur du courant $I_{sc}$ mesuré à l'étape a) et d'une mesure de la tension en circuit ouvert $V_{oc}$ du module photovoltaïque.

4. Procédé selon la revendication 3, dans lequel la valeur T est calculée par le dispositif électronique de contrôle (110) suivant la relation suivante :

[Math 11]

$$T = a(I_{sc}) \cdot V_{oc} + b(I_{sc}),$$

où a et b sont des fonctions polynomiales prédéfinies d'ordres supérieurs ou égaux à 1.

5. Procédé selon la revendication 4, dans lequel a et b sont des fonctions polynomiales d'ordre 2 définies comme suit :

[Math 12]

$$a = a_{cd} \cdot I_{sc}^2 - b_{cd} \cdot I_{sc} - c_{cd}$$

[Math 13]

$$b = a_{oo} \cdot I_{sc}^2 - b_{oo} \cdot I_{sc} - c_{oo}$$

où $a_{cd}$, $b_{cd}$, $c_{cd}$, $a_{oo}$, $b_{oo}$, et $c_{oo}$ sont des coefficients fixes prédéterminés.

6. Procédé selon la revendication 4 ou 5, dans lequel les coefficients desdites fonctions polynomiales sont déterminés lors d'une phase préalable de calibration et stockés dans une mémoire du dispositif électronique de contrôle (110) du module.

7. Procédé selon l'une quelconque des revendications 1 à 6, comportant en outre une étape de commande d'un élément commandable électriquement (102) du système en tenant compte de la valeur de la température ambiante $T_{ext}$ calculée à l'étape c).

8. Système (100) comprenant un module photovoltaïque (104) et un dispositif électronique de traitement d'un dispositif de contrôle (110) configuré pour mettre en oeuvre un procédé selon l'une quelconque des revendications 1 à 7.

9. Système (100) selon la revendication 8, comprenant un dispositif d'occultation motorisé alimenté par le module photovoltaïque (104).

**Patentansprüche**

1. Verfahren zur Bestimmung der Außenumgebungstemperatur $T_{ext}$ in einem System mit einem Photovoltaikmodul (104), das die folgenden Schritte aufweist:

   a) Messen des Kurzschlussstroms $I_{sc}$ des Photovoltaikmoduls;
   b) Bestimmen der Temperatur T des Photovoltaikmoduls; und
   c) Berechnen der Umgebungstemperatur $T_{ext}$ mittels einer elektronischen Verarbeitungseinrichtung einer elektronischen Steuereinrichtung (110) als Funktion des in Schritt a) gemessenen Werts des Kurzschlussstroms $I_{sc}$ und des in Schritt b) bestimmten Werts der Temperatur T des Photovoltaikmoduls,
   wobei der Wert $T_{ext}$ von der elektronischen Steuereinrichtung (110) gemäß der folgenden Beziehung berechnet wird:

$$T_{ext} = A(T) \cdot I_{sc} + B(T),$$

   wobei A und B vordefinierte Polynomfunktionen mit Ordnungen größer oder gleich 1 sind,
   und wobei die Koeffizienten der Polynomfunktionen A und B während einer vorherigen Kalibrierungsphase bestimmt und in einem Speicher der elektronischen Steuervorrichtung (110) des Moduls gespeichert werden.

2. Verfahren nach Anspruch 1, wobei A eine Polynomfunktion der dritten Ordnung und B eine Polynomfunktion der ersten Ordnung ist.

3. Verfahren nach Anspruch 1 oder 2, wobei in Schritt b) die Temperatur T des Photovoltaikmoduls von der elektronischen Steuervorrichtung (110) auf der Grundlage des in Schritt a) gemessenen Werts des Stroms $I_{sc}$ und einer Messung der Leerlaufspannung $V_{oc}$ des Photovoltaikmoduls berechnet wird.

4. Verfahren nach Anspruch 3, wobei der Wert T von der elektronischen Steuervorrichtung (110) gemäß der folgenden Beziehung berechnet wird:

$$[Math\ 11]$$

$$T = a(I_{sc}) \cdot V_{oc} + b(I_{sc}),$$

wobei a und b vordefinierte Polynomfunktionen von Ordnungen größer oder gleich 1 sind.

5. Verfahren nach Anspruch 4, wobei a und b Polynomfunktionen zweiter Ordnung sind, die wie folgt definiert sind:

$$[Math\ 12]$$

$$a = a_{cd} \cdot I_{sc}^2 - b_{cd} \cdot I_{sc} - c_{cd}$$

$$[Math\ 13]$$

$$b = a_{oo} \cdot I_{sc}^2 - b_{oo} \cdot I_{sc} - c_{oo}$$

wobei $a_{cd}$, $b_{cd}$, $c_{cd}$, $a_{oo}$, $b_{oo}$ und $c_{oo}$ vorbestimmte feste Koeffizienten sind.

6. Verfahren nach Anspruch 4 oder 5, wobei die Koeffizienten der Polynomfunktionen während einer vorherigen Kalibrierungsphase bestimmt und in einem Speicher der elektronischen Steuervorrichtung (110) des Moduls gespeichert werden.

7. Verfahren nach einem der Ansprüche 1 bis 6, das ferner einen Schritt zum Steuern eines elektrisch steuerbaren Elements (102) des Systems unter Berücksichtigung des in Schritt c) berechneten Wertes der Umgebungstemperatur $T_{ext}$ aufweist.

8. System (100) mit einem Photovoltaikmodul (104) und einer elektronischen Verarbeitungsvorrichtung einer elektronischen Steuervorrichtung (110), die zur Durchführung eines Verfahrens nach einem der Ansprüche 1 bis 7 konfiguriert ist.

9. System (100) nach Anspruch 8, mit einer motorisierten Verdunkelungsvorrichtung, die von dem Photovoltaikmodul (104) angetrieben wird.

**Claims**

1. Method for determining the outside ambient temperature $T_{ext}$ in a system including a photovoltaic module (104), comprising the following steps:

   a) measuring the short-circuit current $I_{sc}$ of the photovoltaic module;
   b) determining the temperature T of the photovoltaic module; and
   c) calculating the ambient temperature $T_{ext}$, by means of an electronic processing device of an electronic control device (110), as a function of the value of the short-circuit current $I_{sc}$ measured in step a) and of the value of the temperature T of the photovoltaic module determined in step b),

wherein the value $T_{ext}$ is calculated by the electronic control device (110) according to the following relation:

$$T_{ext} = A(T) \cdot I_{sc} + B(T),$$

where A and B are predefined polynomial functions of orders greater than or equal to 1,
and wherein the coefficients of said polynomial functions A and B are determined during a prior calibration phase and stored in a memory of the electronic control device (110) of the module.

2. The method according to claim 1, wherein A is a polynomial function of order 3 and B is a polynomial function of order 1.

3. Method according to claim 1 or 2, wherein, in step b), the temperature T of the photovoltaic module is calculated by the electronic control device (110) based on the value of the current $I_{sc}$ measured in step a) and on a measurement of the open circuit voltage $V_{oc}$ of the photovoltaic module.

4. Method according to claim 3, wherein the value T is calculated by the electronic control device (110) according to the following relation:

[Math 11]
$$T = a(I_{sc}) \cdot V_{oc} + b(I_{sc}),$$

where a and b are predefined polynomial functions of orders greater than or equal to 1.

5. The method of claim 4, wherein a and b are $2^{nd}$-order polynomial functions defined as follows:

[Math 12]
$$a = a_{cd} \cdot I_{sc}^2 - b_{cd} \cdot I_{sc} - c_{cd}$$

[Math 13]
$$b = a_{oo} \cdot I_{sc}^2 - b_{oo} \cdot I_{sc} - c_{oo}$$

where $a_{cd}$, $b_{cd}$, $C_{cd}$, $a_{oo}$, $b_{oo}$, and $c_{oo}$ are predetermined fixed coefficients.

6. Method according to claim 4 or 5, wherein the coefficients of said polynomial functions are determined during a prior calibration phase and stored in a memory of the electronic control device (110) of the module.

7. Method according to any one of claims 1 to 6, further including a step for controlling an electrically controllable element (102) of the system taking into account the value of the ambient temperature $T_{ext}$ calculated in step c).

8. System (100) comprising a photovoltaic module (104) and an electronic processing device of an electronic control device (110) configured to implement a method according to any one of claims 1 to 7.

9. System (100) according to claim 8, comprising a motorized occultation device powered by the photovoltaic module (104).

106

104

100

108

110

102

**Fig 1**

| | |
|---|---|
| Mesure $V_{OC}$ | 301 |

$\downarrow$

| | |
|---|---|
| Mesure $I_{SC}$ | 303 |

$\downarrow$

| | |
|---|---|
| Calcul température | 305 |

$\downarrow$

| | |
|---|---|
| Contrôle | 307 |

**Fig 3**

| | | |
|---|---|---|
| 104 | $\longleftrightarrow$ | 110 |
| | | $\updownarrow$ |
| | | 102 |

**Fig 2**

Fig 4

Fig 5

Fig 6

Fig 7

Fig 8

A

Fig 9

B

Fig 10

## Fig 11

```
┌─────────────────────────────┐
│        Mesure V_OC          │── 401
└─────────────────────────────┘
              │
              ▼
┌─────────────────────────────┐
│        Mesure I_SC          │── 403
└─────────────────────────────┘
              │
              ▼
┌─────────────────────────────┐
│       Détermination T       │── 405
└─────────────────────────────┘
              │
              ▼
┌─────────────────────────────┐
│        Calcul Text          │── 407
└─────────────────────────────┘
              │
              ▼
┌─────────────────────────────┐
│         Contrôle            │── 409
└─────────────────────────────┘
```

## Fig 12

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102013219494